# EUROPEAN PATENT APPLICATION

(11) **EP 4 032 379 A1**
(43) Date of publication of application: **27.07.2022**
(21) Application number: 20864551.5
(22) Date of filing: 17.09.2020
(51) Int. Cl.: A01B 63/10, A01B 63/114

(54) **WORK VEHICLE**

(30) Priority: 18.09.2019 JP 2019169890; 18.09.2019 JP 2019169891
(71) Applicant: KUBOTA CORPORATION, Osaka-shi, Osaka 556-8601 (JP)
(72) Inventor: GONO, Tsuyoshi, Sakai-shi, Osaka 590-0823 (JP); TAKEOKA, Susumu, Sakai-shi, Osaka 590-0823 (JP); TSUJI, Toshiya, Sakai-shi, Osaka 590-0823 (JP); FUJIMOTO, Kazutaka, Sakai-shi, Osaka 590-0823 (JP); TAKAHASHI, Keiji, Sakai-shi, Osaka 590-0823 (JP); YAMADA, Shinya, Sakai-shi, Osaka 590-0823 (JP)
(74) Representative: Global IP Europe Patentanwaltskanzlei
(86) International application number: PCT/JP2020/035233
(87) International publication number: WO 2021/054390

(57) **Abstract**

To easily raise and lower a working device (2) during work performed by the working device (2) according to work conditions and to easily return to the work performed before the raising and lowering and resume the work. A working vehicle (1) includes: a vehicle body (3); a lifting device (8) provided on the vehicle body (3); a first setting member (71) configured to set a reference position (P1) in a height direction of the working device (2) coupled to the lifting device (8); a lifting operation member (51) configured to be operated to raise and lower the lifting device (8); a first lifting control unit (40A) configured to perform reference lifting control to raise or lower the lifting device (8) so that the working device (2) is located at the reference position (P1); and a second lifting control unit (40B) configured to stop the reference lifting control when the lifting operation member is operated during work and to raise or lower the lifting device (8) in response to the operation of the lifting operation member (51). The first lifting control unit (40A) performs control to return the lifting device (8) to a position corresponding to the reference position (P1) when the operation of the lifting operation member (51) is released after the reference lifting control is stopped.

## Description

### [TECHNICAL FIELD]

The present invention relates to a working vehicle such as a tractor.

### [BACKGROUND ART]

A technique disclosed in Patent Literature 1 is known as a technique for controlling a tilling depth of a tractor. A tractor of Patent Literature 1 includes a rotary tiller drivably coupled to a machine body so as to be raised and lowered, a rear cover provided on a rear portion of the rotary tiller so as to be swingable up and down following the ground, a cover sensor that detects a up-and-down swing amount of the rear cover, tilling depth setting means that sets a target tilling depth for the rotary tiller, and automatic lifting control means that operates a lifting driving mechanism of the rotary tiller so that a value detected by the cover sensor coincides with the target tilling depth set by the tilling depth setting means.

### [RELATED ART DOCUMENTS]

### [PATENT DOCUMENTS]

[Patent Document 1] Japanese Unexamined Patent Publication No. 2000-184804

### [DISCLOSURE OF THE INVENTION]

### [PROBLEMS TO BE SOLVED BY THE INVENTION]

The tractor disclosed in Patent Literature 1 can perform tilling so that the position of the rotary tiller corresponds to the target tilling depth. In an agricultural field, for example, when the tractor is going to turn around after the rotary tiller ends tilling, the rotary tiller is raised before the tractor turns around, and the rotary tiller can then resume tilling after the tractor turns around. On the other hand, in tilling using the rotary tiller, it is difficult to raise or lower the rotary tiller according to work conditions in actuality. Further, in tilling using the rotary tiller, when the tilling is resumed after the rotary tiller is raised and lowered, it is necessary to set the tilling depth again, which may reduce work efficiency. Further, when a working device other than the rotary tiller is raised and lowered during work, it is necessary to perform setting for performing the work again.

In addition, in the tractor disclosed in Patent Literature 1, there are many restrictions on raising and lowering a working device other than the rotary tiller during work. Thus, it is difficult to raise and lower the working device according to the work.

In view of the above problems, an object of the present invention is to provide a working vehicle capable of easily raising and lowering a working device according to work conditions during work performed by the working device and capable of easily returning to the work performed before the raising and lowering and resuming the work. It is another object of the present invention to provide a working vehicle capable of easily raising and lowering a working device according to work conditions during work performed by the working device and capable of easily returning the working device to an appropriate position after the raising and lowering and continuing the work.

### [MEANS OF SOLVING THE PROBLEMS]

Technical means of the present invention for solving the technical problems described above is characterized in the following points.

A working vehicle includes: a vehicle body; a lifting device provided on the vehicle body; a first setting member configured to set a reference position in a height direction of a working device coupled to the lifting device; a lifting operation member configured to be operated to raise and lower the lifting device; a first lifting control unit configured to perform reference lifting control to raise or lower the lifting device so that the working device is located at the reference position; and a second lifting control unit configured to stop the reference lifting control when the lifting operation member is operated during the work and to raise or lower the lifting device in response to the operation of the lifting operation member. The first lifting control unit performs control to return the lifting device to a position corresponding to the reference position when the operation of the lifting operation member is released after the reference lifting control is stopped.

The first lifting control unit resumes the reference lifting control after performing the control to return the lifting device to the position corresponding to the reference position.

The second lifting control unit raises or lowers the lifting device within a set range between an upper limit and a lower limit of a height settable by the first setting member when the lifting operation member is operated.

The working vehicle further includes a second setting member capable of setting the upper limit of the height of the lifting device. The second lifting control unit raises or lowers the lifting device within a range defined as being not higher than the upper limit set by the second setting member.

The second lifting control unit raises or lowers the lifting device during the operation of the lifting operation member.

The first setting member is capable of setting a tilling depth of the working device as the reference position of the working device, and the first lifting control unit raises or lowers the lifting device so that the tilling depth is maintained constant.

A working vehicle includes: a vehicle body; a lifting device provided on the vehicle body; a first lifting operation tool configured to be operated to raise and lower the lifting device; and a lifting controller configured to raise or lower the lifting device during the operation of the first lifting operation tool and to move, when the operation is released, the lifting device from a position where the operation is released to another position.

The working vehicle further includes a mode switching member configured to perform switching between a first mode and a second mode. When the first mode is set, the lifting controller raises or lowers the lifting device during operation of the first lifting operation tool and stops raising or lowering the lifting device when the operation is released. When the second mode is set, the lifting controller raises or lowers the lifting device during the operation of the first lifting operation tool and moves the lifting device to a predetermined position when the operation is released.

The first lifting operation tool includes a first raising operation section configured to be operated to raise the lifting device and a first lowering operation section configured to be operated to lower the lifting device. The lifting controller raises the lifting device during operation of the first raising operation unit and lowers the lifting device during operation of the first lowering operation section.

The working vehicle further includes: a second lifting operation tool including a second raising operation section configured to be operated to raise the lifting device and a second lowering operation section configured to be operated to lower the lifting device; and a height setting tool capable of setting an upper limit and a lower limit of a height of the lifting device. The lifting controller raises the lifting device to the upper limit position when the second raising operation section is operated and lowers the lifting device to the lower limit position when the second lowering operation section is operated.

The first lifting operation tool and the second lowering operation tool are arranged side by side.

The working vehicle further includes a first setting member configured to set a reference position in a height direction of a working device coupled to the lifting device. The lifting controller sets the predetermined position to the reference position and performs reference lifting control to raise or lower the lifting device so that the lifting device is located at the reference position in a state where the operation of the first lifting operation tool is released in the second mode.

### [EFFECTS OF THE INVENTION]

According to the present invention, it is possible to easily raise and lower a working device according to work conditions during work performed by the working device and to easily return to the work performed before the raising and lowering and resume the work. Also, according to the present invention, it is possible to easily raise and lower a working device according to work conditions during work performed by the working device and to easily return the working device to an appropriate position after the raising and lowering and continue the work.

### [BRIEF DESCRIPTION OF THE DRAWINGS]

FIG. 1 is a control block diagram relating to raising and lowering of a tractor.
FIG. 2 is a perspective view of a lifting device.
FIG. 3 is a plan view of an operator's seat and an armrest.
FIG. 4 is a left side view of the operator's seat and the armrest.
FIG. 5 is a perspective view of the armrest.
FIG. 6A is an explanatory diagram for explaining a reference position P1.
FIG. 6B is an explanatory diagram for explaining a height upper limit H1.
FIG. 6C is a diagram illustrating the relationship between the reference position P1 and a detection position P2.
FIG. 7A is a diagram illustrating a state of reference lifting control from stop to return.
FIG. 7B is a diagram illustrating a state of a working device from when the working device is lowered to when the working device is returned to a predetermined position.
FIG. 8 is a diagram illustrating the relationship between operation of a first lifting operation tool and a control signal.
FIG. 9 is an overall view of the tractor.

### [BEST MODE FOR CARRYING OUT THE INVENTION]

Hereinbelow, an embodiment of the present invention will be described with reference to the drawings.

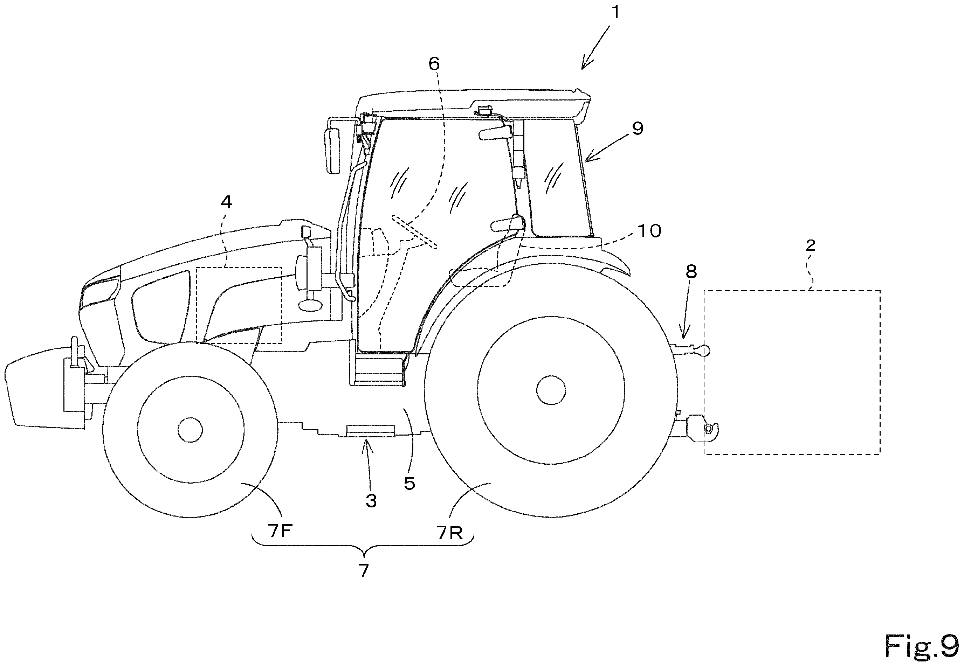

FIG. 9 illustrates a tractor 1, which is an example of a working vehicle. Although the tractor 1 will be described as an example of the working vehicle, the working vehicle is not limited to the tractor and may be an agricultural machine such as rice transplanter.

As illustrated in FIG. 9, the tractor 1 includes a traveling vehicle body (vehicle body) 3 including a traveling device 7, a prime mover 4, a transmission 5, and a steering wheel 6. The traveling device 7 includes front wheels 7F and rear wheels 7R. The front wheels 7F may be a wheel type or may be a crawler type. Also, the rear wheels 7R may be a wheel type or may be a crawler type. The prime mover 4 is, for example, an internal combustion engine such as a gasoline engine or a diesel engine, or an electric motor. In the present embodiment, the prime mover 4 is a diesel engine.

The transmission 5 is capable of speed-shiftably transmitting a driving force to driving the traveling device 7 and capable of switching the traveling device 7 between forward traveling and backward traveling. The traveling vehicle body 3 is provided with a cabin 9. An operator's seat 10 is provided inside the cabin 9.

A lifting device 8 is provided on a rear portion of the traveling vehicle body 3. A working device 2 is detachably attached to the lifting device 8. The lifting device 8 is capable of raising and lowering the working device 2 attached thereto. Examples of the working device 2 include a tiller that performs tilling, a fertilizer spraying device that sprays fertilizer, an agricultural chemical spraying device that sprays agricultural chemicals, a harvester that performs harvesting, a mower that mows, for example, grass, a scattering device that scatters, for example, grass, a grass collecting device that collects, for example, grass, and a shaping device that shapes, for example, grass.

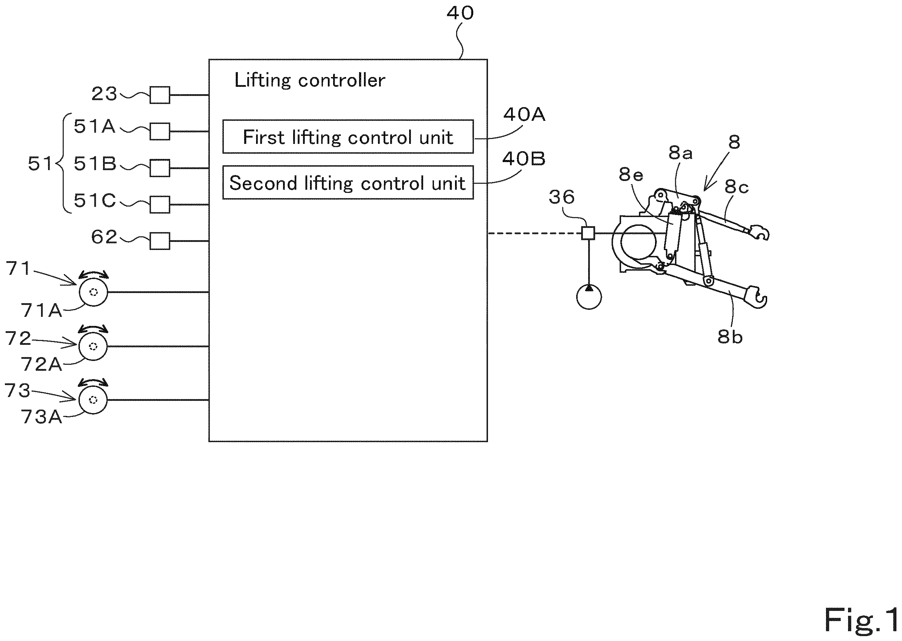

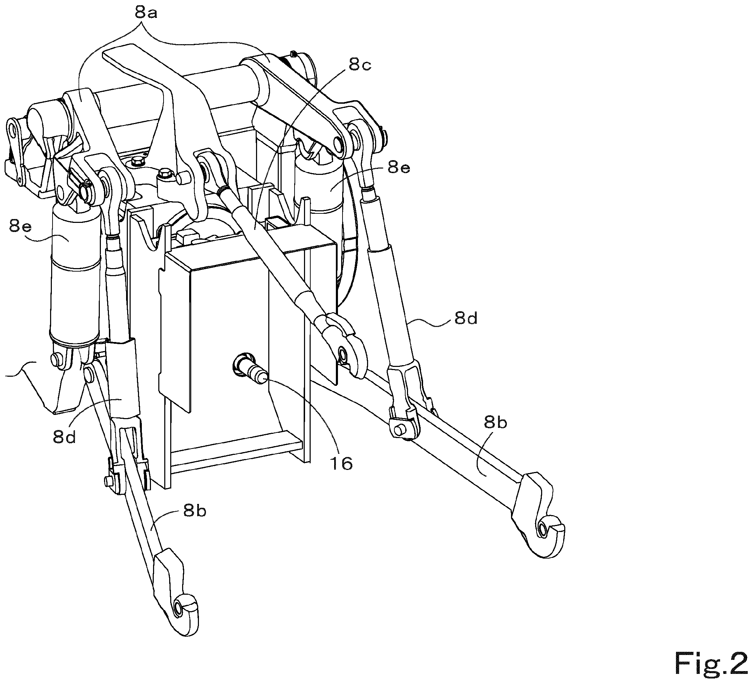

As illustrated in FIG. 2, the lifting device 8 includes lift arms 8a, lower linkages 8b, a top linkage 8c, lift rods 8d, and lift cylinders 8e. Front end portions of the lift arms 8a are supported swingably upward or downward by rear upper portions of a case (transmission case) in which the transmission 5 is housed. The lift arms 8a are swung (are raised and lowered) by driving of the lift cylinders 8e. Hydraulic cylinders serve as the lift cylinders 8e. As illustrated in FIG. 1, the lift cylinders 8e are fluidly connected to a hydraulic pump through a control valve 36. The control valve (hydraulic control valve) 36 is, for example, a solenoid valve, and extends and contracts the lift cylinders 8e. For example, the control valve 36 is a 3-position switching valve switchable between a first position, a second position, and a neutral position. The control valve 36 can extend the lift cylinders 8e (for raising) when the control valve 36 is located at the first position and can contract the lift cylinders 8e (for lowering) when the control valve 36 is located at the second position.

Front end portions of the lower linkages 8b are supported swingably upward or downward by rear lower portions of the transmission 5. A front end portion of the top linkage 8c is supported swingably upward or downward on a rear portion of the transmission 5 above the lower linkage 8b. The lift rods 8d couple the lift arms 8a to the lower linkages 8b, respectively. The working device 2 is coupled to rear portions of the lower linkages 8b and a rear portion of the top linkage 8c. When the lift cylinders 8e are driven (extended or contracted), the lift arms 8a rise or lower, and the lower linkages 8b coupled to the lift arms 8a through the lift rods 8d rise or lower. Accordingly, the working device 2 swings upward or downward (rises or lowers) about the front portions of the lower linkages 8b serving as fulcrums.

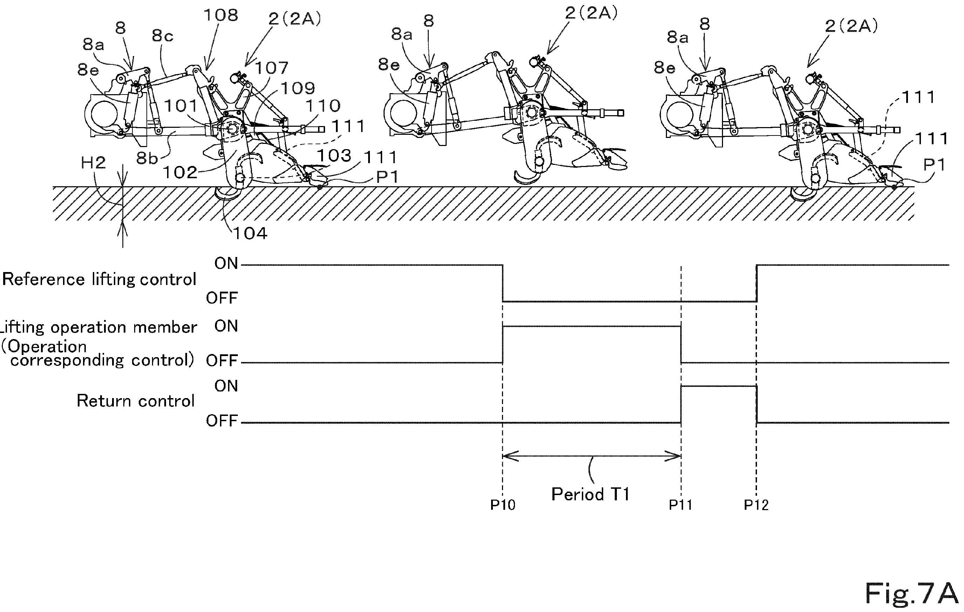

A tiller 2A, which is an example of the working device 2 coupled to the lifting device 8, will be described with reference to FIG. 7A. The tiller 2A includes a gear case 101 to which power of a PTO shaft 16 is transmitted, a driving case 102 to which power of the gear case 101 is transmitted, the driving case 102 extending downward, a rotary shaft 103 rotatably supported on the driving case 102, and a tilling tine 104 attached to the rotary shaft 103. Each of the gear case 101 and the driving case 102 is provided with a transmission mechanism that transmits power. Power of the PTO shaft 16 is transmitted by the transmission mechanisms to rotate the rotary shaft 103, which enables the tilling tine 104 to perform tilling. A mast 107 is provided on an upper portion of the gear case 101. A rear end of the top linkage 8c is coupled to a coupler (quick coupler) 108, and a rear end of the lower linkage 8b is coupled to the coupler 108. The tiller 2A is coupled to the lifting device 8 through the coupler 108 by hooking an upper portion of the coupler 108 on the mast 107. The tiller 2A includes a fixed cover 110 fixed to a support frame 109 supporting the gear case 101, and a swing cover 111 swingably (vertically swingably) supported on the fixed cover 110. A rear end of the swing cover 111 is in contact with the agricultural field (ground). The swing cover 111 swings when a height position of the tiller 2A changes relative to the ground. The swing cover 111 is provided with a detector (not illustrated) that detects a swing. The detector is capable of detecting a swing amount of the swing cover 111, that is, a position (detection position) P2 in a height direction of the tiller 2A. The detector is not limited to any particular device, and may be, for example, a sensor that detects the swing amount of the swing cover 111, or the swing amount may be detected using movement of a wire having one end connected to the swing cover 111 and the other end extending to the tractor 1. Detection information (detection value) detected by the detector is input to a lifting controller 40, which will be described later.

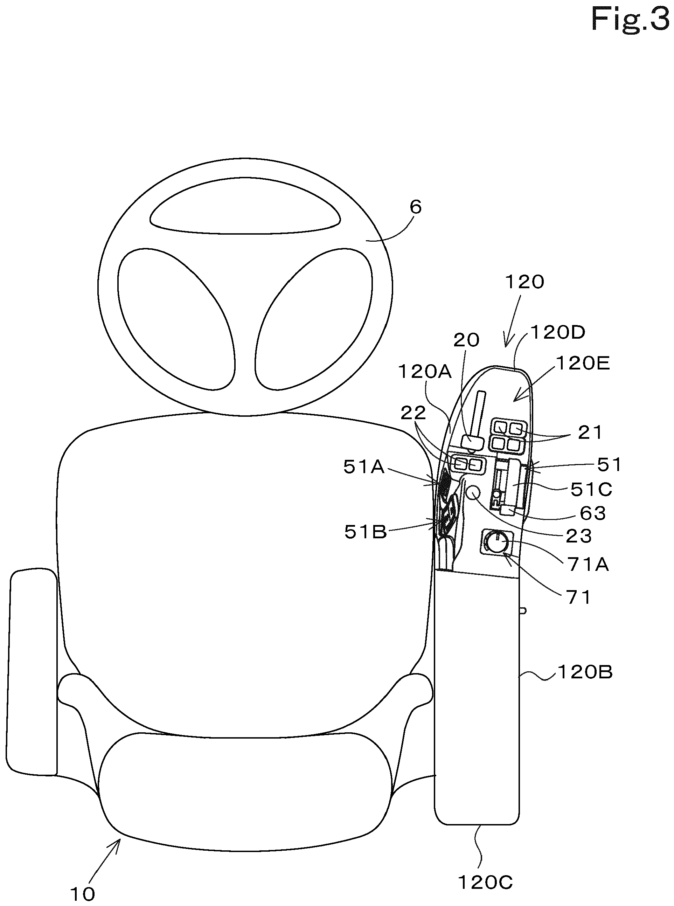

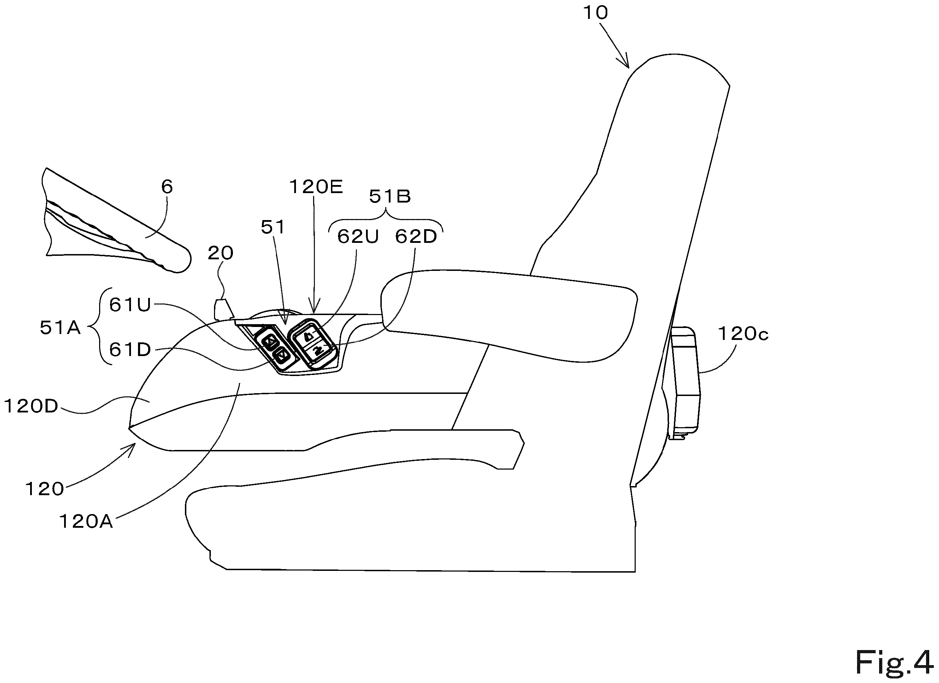

As illustrated in FIGS. 3 to 5, for example, an armrest 120 is provided beside the operator's seat 10.

The armrest 120 includes a left side portion 120A disposed facing the operator's seat 10, a right side portion 120B disposed opposite to the left side portion 120A, that is, disposed on the side opposite to the operator's seat 10, a rear portion 120C disposed between a rear end of the left side portion 120A and a rear end of the right side portion 120B, a front portion 120D disposed between a front end of the left side portion 120A and a front end of the right side portion 120B, and a top portion 120E connecting tops of the left side portion 120A, the right side portion 120B, the rear portion 120C, and the front portion 120D to each other. The armrest 120 is provided with various operation members.

The armrest 120 includes a speed shifting lever 20 that performs speed shift of the transmission 5, a setting button 21 that sets an engine rotation speed, a setting button 22 that sets a vehicle speed, and a mode switching member 23 that switches a mode. The mode switching member 23 is a push switch switchable between ON and OFF.

The tractor 1 includes a lifting operation member 51 that is operated to raise or lower the lifting device 8. The lifting operation member 51 includes a first lifting operation tool 51A, a second lifting operation tool 51B, and a third lifting operation tool 51C. The first lifting operation tool 51A, the second lifting operation tool 51B, and the third lifting operation tool 51C are provided on the armrest 120. For example, the first lifting operation tool 51A and the second lifting operation tool 51B are provided on the left side portion 120A, and the third lifting operation tool 51C is provided on the top portion 120E. The first lifting operation tool 51A and the second lifting operation tool 51B are arranged side by side. The mode switching member 23 is provided above the first lifting operation tool 51A and the second lifting operation tool 51B. The first lifting operation tool 51A and the second lifting operation tool 51B are slanted rearward from top to bottom. The first lifting operation tool 51A and the second lifting operation tool 51B are offset in the vertical direction. That is, a position of an upper end of the second lifting operation tool 51B is lower than a position of an upper end of the first lifting operation tool 51A. The arrangement of the first lifting operation tool 51A, the second lifting operation tool 51B, and the third lifting operation tool 51C is merely an example and not limited thereto.

The first lifting operation tool 51A includes a first raising operation section 61U that is operated to raise the lifting device 8 and a first lowering operation section 61D that is operated to lower the lifting device 8. Each of the first raising operation section 61U and the first lowering operation section 61D is, for example, a push switch. The first raising operation section 61U issues a command for raising when pressed and cancels the raising command when not pressed. The first lowering operation section 61D issues a command for lowering when pressed and cancels the lowering command when not pressed.

The second lifting operation tool 51B includes a second raising operation section 62U that is operated to raise the lifting device 8 and a second lowering operation section 62D that is operated to lower the lifting device 8. Each of the second raising operation section 62U and the second lowering operation section 62D is, for example, a seesaw switch. The second raising operation section 62U issues a command for raising when pressed to swing to one side. The second lowering operation section 62D issues a command for lowering when pressed to swing to the other side.

The third lifting operation tool 51C is, for example, a rotary operation tool turnable to one side or the other side. When a knob 63 is moved to one side (forward), the third lifting operation tool 51C issues a command for raising corresponding to an operation amount. When the knob 63 is moved to the other side (rearward), the third lifting operation tool 51C issues a command for lowering corresponding to an operation amount. That is, the third lifting operation tool 51C can adjust raising and lowering of the lifting device 8 in accordance with the operation amount. A raising and lowering range of the lifting device 8 raised and lowered by operating the third lifting operation tool 51C (a range within which the lifting device 8 can be raised and lowered when the third lifting operation tool 51C is operated from minimum to maximum) may be larger than a raising and lowering range of the first lifting operation tool 51A.

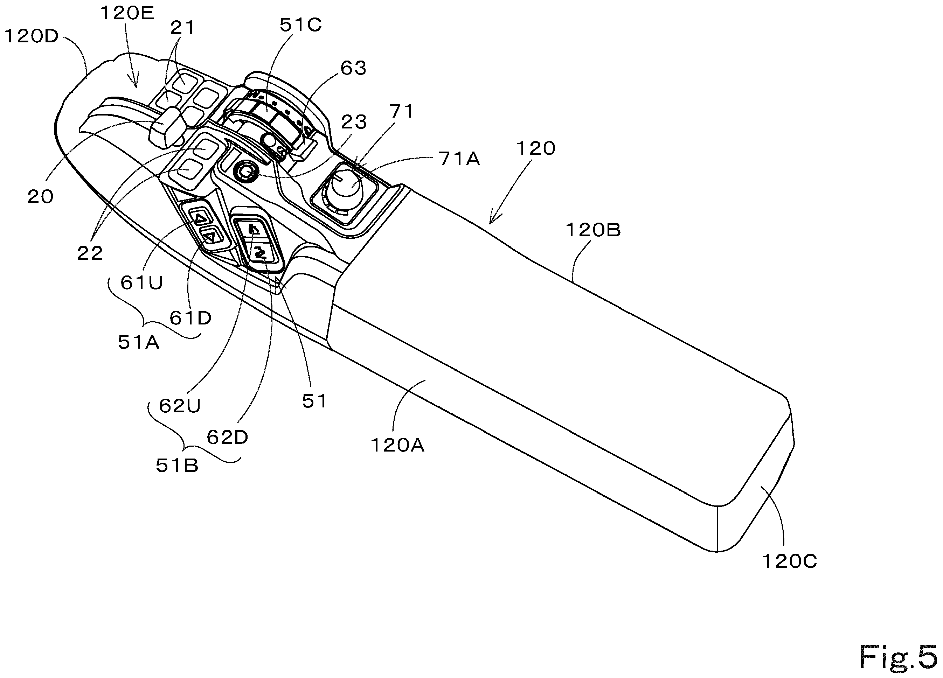

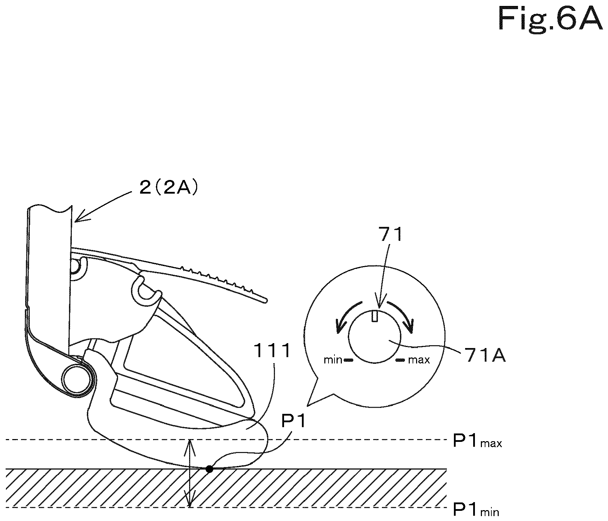

As illustrated in FIG. 1, the tractor 1 includes a first setting member 71 and a second setting member 72. The first setting member 71 sets a reference position P1 in the height direction of the working device 2 coupled to the lifting device 8. As illustrated in FIGS. 3 and 5, the first setting member 71 is a rotary switch and includes a knob 71Aturnably supported on a vertical shaft. As illustrated in FIG. 6A, when the knob 71A is turned to one side (leftward), the reference position P1 is set to a low position. When the knob 71A is turned to the other side (rightward), the reference position P1 is set to a high position. The first setting member 71 can set the reference position P1 to a minimum reference position P1min when the knob 71A is turned maximum to the one side and can set the reference position P1 to a maximum reference position P1max when the knob 71A is turned maximum to the other side. In the present embodiment, the first setting member 71 is a tilling depth setting dial that sets the depth of tilling. The first setting member 71 is not limited to any particular member and may be any member that sets the reference position P1 in the height direction of the working device 2.

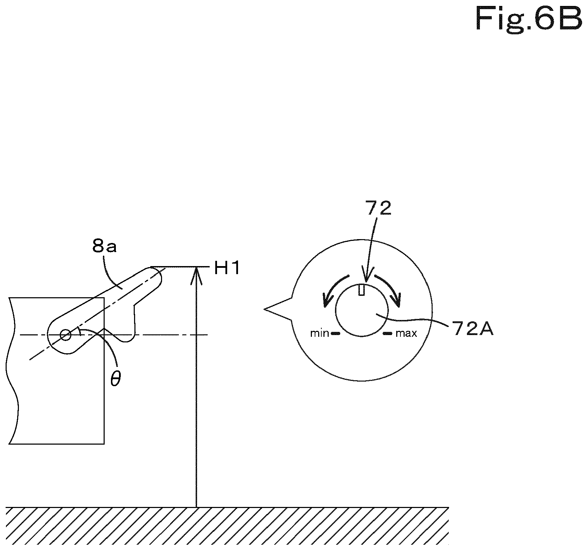

As illustrated in FIG. 1, the second setting member 72 is capable of setting an upper limit (height upper limit) H1 of the height of the lifting device 8. The second setting member 72 includes a knob 72A turnably supported on a vertical shaft as with the first setting member 71. As illustrated in FIG. 6B, when the knob 72A is turned to one side (leftward), the height upper limit H1 of the lift rod 8d (the upper limit of an angle θ of the lift rod 8d) when the lift cylinder 8e of the lifting device 8 is extended becomes higher. On the other hand, when the knob 72A is turned to the other side (rightward), the height upper limit H1 of the lift rod 8d (the upper limit of the angle θ of the lift rod 8d) becomes lower. That is, the second setting member 72 sets the height upper limit H1 of the lifting device 8 by setting the upper limit of the angle θ of the lift rod 8d.

As illustrated in FIG. 1, the tractor 1 includes the lifting controller 40 that controls the lifting device 8. The control valve (hydraulic control valve) 36 is connected to the lifting controller 40. When the lifting controller 40 outputs a control signal for energizing an extension solenoid of the hydraulic control valve 36, the hydraulic control valve 36 is switched to the first position to extend (raise) the lift cylinder 8e. When the lifting controller 40 outputs a control signal for energizing a contraction solenoid of the hydraulic control valve 36, the hydraulic control valve 36 is switched to the second position to contract (lower) the lift cylinder 8e. The lifting controller 40 can stop the lift cylinder 8e at any position by de-energizing the solenoids of the hydraulic control valve 36.

The lifting controller 40 includes a first lifting control unit 40A and a second lifting control unit 40B. The first lifting control unit 40A performs reference lifting control to raise or lower the lifting device 8 so that the working device 2 is located at the reference position P1. When the lifting operation member 51 is operated during work, the second lifting control unit 40B stops the reference lifting control and raises or lowers the lifting device 8 in response to the operation of the lifting operation member 51.

Hereinbelow, an example of the reference lifting control in tilling performed by the tiller 2A will be described.

As illustrated in FIG. 7A, in performing tilling, the reference position P1 set by the first setting member 71 is set as a position of the rear end of the swing cover 111. That is, a tilling depth H2 is set by setting the position of the rear end of the swing cover 111 as the reference position P1.

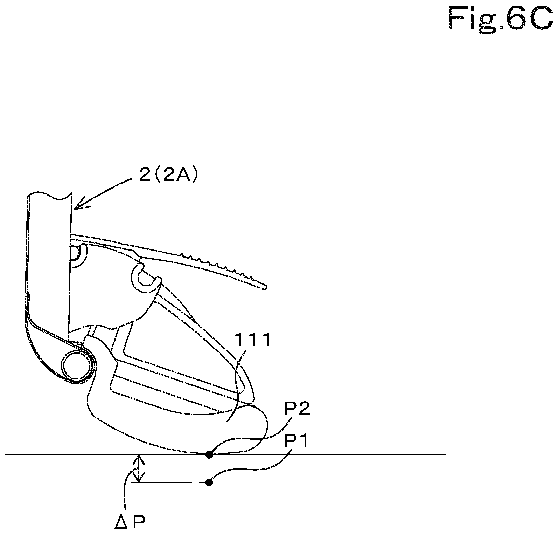

As illustrated in FIG. 6C, the first lifting control unit 40A starts the reference lifting control in a state where the tiller 2A is driven. In the reference lifting control, when the detection position P2 of the swing cover 111 is higher than the reference position P1, the first lifting control unit 40A outputs a control signal for lowering (lowering control signal) to the hydraulic control valve 36 to perform control so that the detection position P2 coincides with the reference position P1. On the other hand, in the reference lifting control, when the detection position P2 of the swing cover 111 is lower than the reference position P1, the first lifting control unit 40A outputs a control signal for raising (raising control signal) to the hydraulic control valve 36 to perform control so that the detection position P2 coincides with the reference position P1. That is, the first lifting control unit 40A controls raising and lowering of the lifting device 8 so that a deviation ΔP between the reference position P1 and the detection position P2 become zero in the reference lifting control.

When the first raising operation section 61U is operated under the condition where the reference lifting control is performed, the second lifting control unit 40B stops the reference lifting control performed by the first lifting control unit 40A. While the first lifting operation unit 61U remains operated (pressed), the second lifting control unit 40B outputs the raising control signal to the hydraulic control valve 36 to raise the rear end of the lift rod 8d of the lifting device 8 (operation corresponding control).

When the operation of the first raising operation section 61U (pressing of the first raising operation section 61U) is released, the first lifting control unit 40A performs control to return the position of the rear portion (rear end) of the swing cover 111 coupled to the lifting device 8 to a position corresponding to the reference position P1 (return control). That is, the first lifting control unit 40A outputs the lowering control signal to the hydraulic control valve 36 to lower the rear end of the lift rod 8d of the lifting device 8 at a point in time when the operation of the first lifting operation unit 61U is released.

The first lifting control unit 40A resumes the reference lifting control at a point in time when the difference between the detection position P2 of the swing cover 111 and the reference position P1 becomes equal to or smaller than a threshold after the first lifting control unit 40A performs the control to return the lifting device 8 to the position corresponding to the reference position P1.

FIG. 7A is a diagram illustrating a state of the reference lifting control from stop to return.

As illustrated in FIG. 7A, under the condition where the first lifting control unit 40A performs the reference lifting control, the control is performed so that the tilling depth is maintained at the tilling depth H2. Under such a condition, as indicated at a time point P10 in FIG. 7A, when the first raising operation section 61U is operated (OFF to ON), the reference lifting control performed by the first lifting control unit 40A is stopped (OFF), and the operation corresponding control performed by the second lifting control unit 40B is started (OFF to ON). When the first lifting operation tool 51A of the lifting operation member 51 is operated, during a period T1 in which the first raising operation section 61U of the first lifting operation tool 51A remains operated, the second lifting control unit 40B continuously raises the lifting device 8 (tiller 2A). When the height of the lifting device 8 (tiller 2A) reaches the height upper limit H1 set by the second setting member 72 during the operation of the first raising operation section 61U, the second lifting control unit 40B stops raising the lifting device 8. That is, the second lifting control unit 40B raises or lowers the lifting device 8 within a range equal to or lower than the upper limit H1 set by the second setting member 72.

As indicated at a time point P11 in FIG. 7A, when the operation of the first raising operation section 61U is released (OFF), the second lifting control unit 40B stops the operation corresponding control (OFF). Then, the first lifting control unit 40A performs the return control for a predetermined time (OFF to ON). Then, at a time point P12, the first lifting control unit 40A resumes the reference lifting control (OFF to ON).

The above embodiment describes the reference lifting control and the return control performed by the first lifting control unit 40A as separate control operations. However, when the reference lifting control is resumed (OFF to ON) from a stopped state (OFF), the reference lifting control may include the return control.

Accordingly, when the operation of the first lifting operation tool 51A is released under the condition where the reference lifting control is performed so that the height position of the working device 2 coincides with the reference position P1, the first lifting control unit 40A of the lifting controller 40 can perform the control to return the lifting device 8 to the position corresponding to the reference position P1.

The above embodiment describes tilling and the operation of the first raising operation section 61U as an example, control performed by the first lifting control unit 40A and the second lifting control unit 40B is not limited to the above embodiment.

For example, in the working device 2 that does not perform tilling, the first setting member 71 sets the reference position P1, and the first lifting control unit 40A performs the reference lifting control so that the working device 2 is located at the reference position P1 during work. On the other hand, for example, when the first lowering operation section 61D is operated in the reference lifting control, the reference lifting control is stopped, and the second lifting control unit 40B performs the operation corresponding control to lower the lifting device 8. When the operation of the first lowering operation section 61D is released, the second lifting control unit 40B stops the operation corresponding control, and the first lifting control unit 40A resumes the reference lifting control.

The lifting controller 40 is switchable between a first mode and a second mode using the mode switching member 23. When the mode switching member 23 is OFF, the lifting controller 40 is set to the first mode. On the other hand, when the mode switching member 23 is ON, the lifting controller 40 is set to the second mode. The operation of the lifting controller 40 performed when the first lifting operation tool 51A is operated differs between when the lifting controller 40 is in the first mode and when the lifting controller 40 is in the second mode.

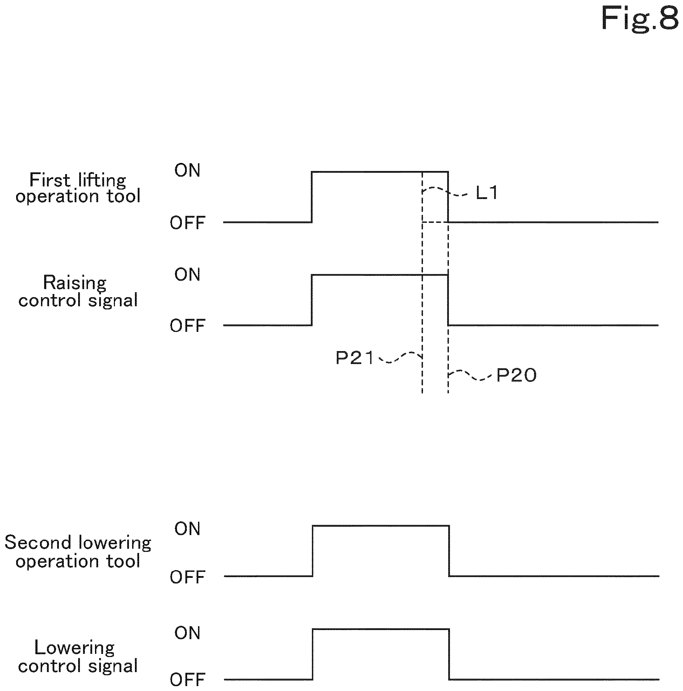

As illustrated in FIG. 8, when the lifting controller 40 is in the first mode, while the first lifting operation tool 51A remains operated (in operation), that is, the first raising operation section 61U remains pressed, the lifting controller 40 continuously outputs the raising control signal to the hydraulic control valve 36 to raise the lifting device 8. As indicated at a time point P20 in FIG. 8, when the operated state of the first lifting operation tool 51A, that is, the operation of the first lifting operation tool 51A is released (the pressing of the first raising operation section 61U is released), the lifting controller 40 stops outputting the raising control signal to the hydraulic control valve 36 to stop raising the lifting device 8.

As indicated at a time point P21 in FIG. 8, when the height of the lifting device 8 reaches the height upper limit H1 under the condition where the lifting device 8 is raised, the lifting controller 40 stops outputting the raising control signal to the hydraulic control valve 36 even when the first raising operation section 61U is being pressed as indicated by a control signal L1.

When the lifting controller 40 is in the first mode, while the first lifting operation tool 51A remains operated (in operation), that is, the first lowering operation section 61D remains pressed, the lifting controller 40 continuously outputs the lowering control signal to the hydraulic control valve 36 to lower the lifting device 8.

On the other hand, when the lifting controller 40 is in the second mode, as described above, although the lifting controller 40 raises or lowers the lifting device 8 during operation of the first lifting operation tool 51A, the lifting controller 40 moves the lifting device 8 to the predetermined position when the operation of the first lifting operation tool 51A is released. For example, as illustrated in FIG. 7A, the lifting controller 40 performs the reference lifting control to raise or lower the working device 2 using the reference position P1 as the predetermined position.

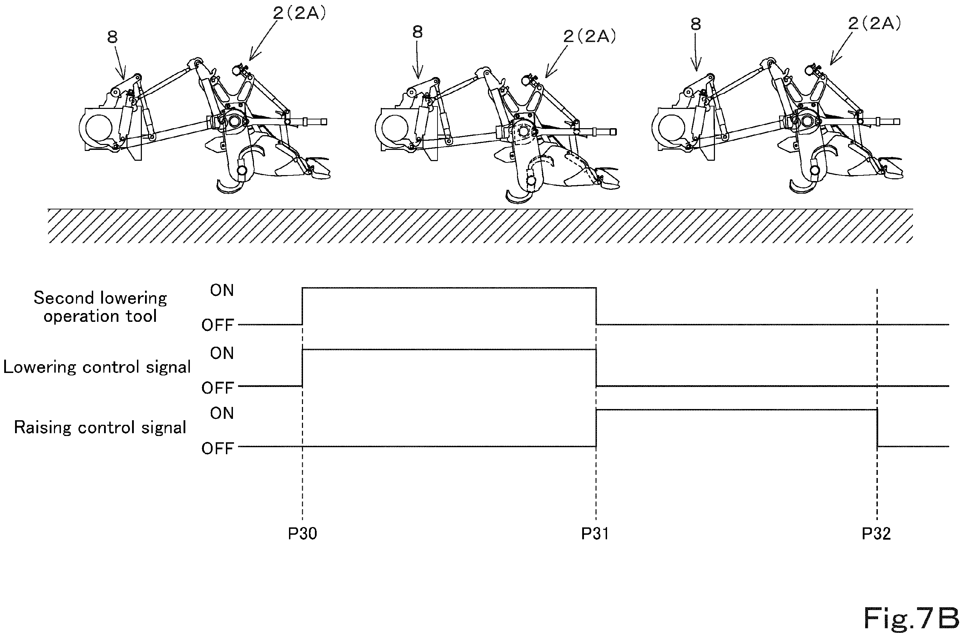

Alternatively, when the lifting controller 40 is in the second mode, the lifting controller 40 continuously outputs the lowering control signal to the hydraulic control valve 36 to lower the lifting device 8 while the first lowering operation section 61D remains pressed as indicated at a time point P30 in FIG. 7B, and stops outputting the lowering control signal to the hydraulic control valve 36 at a point in time when the pressing of the first lowering operation section 61D is released as indicated at a time point P31 and then outputs the raising control signal to the hydraulic control valve 36. Further, as indicated at a time point P32 in FIG. 7B, the lifting controller 40 in the second mode stops outputting the raising control signal when the lifting device 8 returns to a state (predetermined position) before being lowered from the time point P30.

In the above embodiment, the second setting member 72 can set the height upper limit H1. However, as illustrated in FIG. 1, the tractor 1 may include a third setting member 73 capable of setting a height lower limit H3.

The third setting member 73 includes a knob 73A rotatably supported on a vertical shaft as with the second setting member 72. The height lower limit H3 of the lift rod 8d (the lower limit of the angle θ of the lift rod 8d) when the lift cylinder 8e of the lifting device 8 is contracted becomes lower. On the other hand, when the knob 72A is turned to the other side (rightward), the height lower limit H3 of the lift rod 8d (the lower limit of the angle θ of the lift rod 8d) becomes higher. In this case, the second setting member 72 and the third setting member 73 enable the tractor 1 to include a height setting tool capable of setting both the height upper limit H1 and the height lower limit H3 of the lifting device 8. In this case, when the second raising operation section 62U of the second lifting operation tool 51B is operated, the lifting controller 40 performs control to raise the lifting device 8 to the height upper limit H1 regardless of whether the lifting controller 40 is in the first mode or the second mode. When the second lowering operation section 62D is operated, the lifting controller 40 performs control to lower the lifting device 8 to the height lower limit H3 regardless of whether the lifting controller 40 is in the first mode or the second mode.

The working vehicle 1 includes the vehicle body 3, the lifting device 8 provided on the vehicle body 3, the first setting member 71 configured to set the reference position P1 in the height direction of the working device 2 coupled to the lifting device 8, the lifting operation member 51 configured to be operated to raise and lower the lifting device 8, the first lifting control unit 40A configured to perform reference lifting control to raise or lower the lifting device 8 so that the working device 2 is located at the reference position P1, and the second lifting control unit 40B configured to stop the reference lifting control when the lifting operation member 51 is operated during the work and raises or lowers the lifting device 8 in response to the operation of the lifting operation member 51. The first lifting control unit 40A performs control to return the lifting device 8 to the position corresponding to the reference position P1 when the operation of the lifting operation member 51 is released after the reference lifting control is stopped. Accordingly, under the condition where work is performed while the reference lifting control is performed to raise or lower the lifting device 8 so that the working device 2 is located at the reference position P1, it is possible to easily raise or lower the working device by operating the lifting operation member 51 during the work. Further, when the operation of the lifting operation member 51 is released, the working device can be easily returned to the work performed before the raising or lowering.

The first lifting control unit 40A resumes the reference lifting control after performing the control to return the lifting device 8 to the position corresponding to the reference position P1. Accordingly, when the lifting device 8 is raised or lowered by operating the lifting operation member 51 during the work, the work controlled by the reference lifting control can be continued by returning the lifting device 8 to the state before the lifting operation member 51 is operated (the state before raised or lowered).

The second lifting control unit 40B raises or lowers the lifting device 8 within a set range between the upper limit and the lower limit of the height settable by the first setting member 71 when the lifting operation member 51 is operated. Accordingly, the lifting device 8 can be raised or lowered by operation of the lifting operation member 51 within the set range between the upper limit and the lower limit of the reference position P1. Thus, it is possible to easily and smoothly shift to the work controlled by the reference lifting control also after raising and lowering through the operation and to temporarily raise or lower the working device 2 without interrupting the work controlled by the reference lifting control.

The working vehicle 1 includes the second setting member 72 capable of setting the upper limit of the height of the lifting device 8. The second lifting control unit 40B raises or lowers the lifting device 8 within the range defined as being not higher than the upper limit set by the second setting member 72. Accordingly, for example, even within the set range between the upper limit and the lower limit of the reference position P1, it is possible to prevent the working device 2 from being raised above the height upper limit of the lifting device 8.

The second lifting control unit 40B raises or lowers the lifting device 8 during the operation of the lifting operation member 51. Accordingly, the lifting device 8 can be raised or lowered only while the lifting operation member 51 remains operated (in operation). Thus, a driver (operator) can set the height of the working device 2 to an intended height. In other words, the height of the working device 2 can be easily finely adjusted.

The first setting member 71 is capable of setting the tilling depth of the working device 2 as the reference position P1 of the working device 2. The first lifting control unit 40A raises or lowers the lifting device 8 so that the tilling depth is maintained constant. Accordingly, the working device 2 can be raised or lowered using the lifting operation member 51 during tilling, which further improves workability.

The working vehicle 1 includes the vehicle body 3, the lifting device 8 provided on the vehicle body 3, the first lifting operation tool 51A configured to be operated to raise and lower the lifting device 8, and the lifting controller 40 configured to raise or lower the lifting device 8 during the operation of the first lifting operation tool 51A and to move, when the operation is released, the lifting device 8 from a position where the operation is released to another position. Accordingly, the working device 2 can be easily raised or lowered only while the first lifting operation tool 51A remains operated (in operation) during work performed by the working device 2. When the operation of the first lifting operation tool 51A is released, the working device can be returned to an appropriate position after raised or lowered and can continue the work.

The working vehicle 1 includes the mode switching member 23 configured to perform switching between the first mode and the second mode. When the first mode is set, the lifting controller 40 raises or lowers the lifting device 8 during the operation of the first lifting operation tool 51A and stops raising or lowering the lifting device 8 when the operation is released. When the second mode is set, the lifting controller 40 raises or lowers the lifting device 8 during the operation of the first lifting operation tool 51A and moves the lifting device 8 to a predetermined position when the operation is released. Accordingly, switching between the first mode and the second mode makes it possible to raise or lower the lifting device 8 (working device 2) only while the first lifting operation tool 51A remains operated (in operation) to stop the lifting device 8 (working device 2) at an intended position or to return the height of the working device 2 to a predetermined position (predetermined height) after temporarily raising or lowering the first lifting operation tool 51A. Thus, work can be performed according to various conditions.

The first lifting operation tool 51A includes the first raising operation section 61U configured to be operated to raise the lifting device 8 and the first lowering operation section 61D configured to be operated to lower the lifting device 8. The lifting controller 40 raises the lifting device 8 during operation of the first raising operation section 61U and lowers the lifting device 8 during operation of the first lowering operation section 61D. Accordingly, raising and lowering of the lifting device 8 (working device 2) can be individually performed. Thus, the height of the working device 2 can be finely adjusted.

The working vehicle 1 includes the second lifting operation tool 51B including the second raising operation section 62U configured to be operated to raise the lifting device 8 and the second lowering operation section 62D configured to be operated to lower the lifting device 8, and the height setting tool capable of setting the upper limit and the lower limit of the height of the lifting device 8. The lifting controller 40 raises the lifting device 8 to the position corresponding to the upper limit when the second raising operation section 62U is operated and lowers the lifting device 8 to the position corresponding to the lower limit when the second lowering operation section 62D is operated. Accordingly, under the condition where the first lifting operation tool 51A can adjust the height, it is possible to raise the lifting device 8 (working device 2) to the upper limit height at a stroke and to lower the lifting device 8 (working device 2) to the lower limit height at a stroke.

The first lifting operation tool 51A and the second lifting operation tool 51B are arranged side by side. Accordingly, it is possible to promptly perform raising or lowering as needed while properly using different raising and lowering modes of the lifting device 8 (working device 2).

The working vehicle 1 includes the first setting member 71 configured to set the reference position P1 in the height direction of the working device 2 coupled to the lifting device 8. The lifting controller 40 sets the predetermined position to the reference position P1 and performs the reference lifting control to raise or lower the lifting device 8 so that the lifting device 8 is located at the reference position P1 in a state where the operation of the first lifting operation tool 51 is released in the second mode. Accordingly, under the condition where work is performed while the reference lifting control is performed to raise or lower the lifting device 8 so that the working device 2 is located at the reference position P1, it is possible to easily raise or lower the working device by operating the lifting operation member 51 during the work. Further, when the operation of the lifting operation member 51 is released, the working device can be easily returned to the work performed before the raising or lowering.

All the features of the embodiment disclosed in this application should be considered just as examples, and the embodiment does not restrict the present invention accordingly. A scope of the present invention is illustrated not in the above-described embodiment but in claims, and is intended to include all modifications within and equivalent to a scope of the claims.

### [DESCRIPTION OF THE REFERENCE NUMERAL]

- 1: Working vehicle (Tractor)
- 2: Working device
- 3: Vehicle body
- 8: Lifting device
- 40A: First lifting control unit
- 40B: Second lifting control unit
- 51: Lifting operation member
- 71: First setting member
- 72: Second setting member
- H1: Upper limit (Height upper limit)
- P1: Reference position

## Claims

1. A working vehicle comprising:
a vehicle body;
a lifting device provided on the vehicle body;
a first setting member configured to set a reference position in a height direction of a working device coupled to the lifting device;
a lifting operation member configured to be operated to raise and lower the lifting device;
a first lifting control unit configured to perform reference lifting control to raise or lower the lifting device so that the working device is located at the reference position; and
a second lifting control unit configured to stop the reference lifting control when the lifting operation member is operated during the work and to raise or lower the lifting device in response to the operation of the lifting operation member, wherein
the first lifting control unit performs control to return the lifting device to a position corresponding to the reference position when the operation of the lifting operation member is released after the reference lifting control is stopped.

2. The working vehicle according to claim 1, wherein the first lifting control unit resumes the reference lifting control after performing the control to return the lifting device to the position corresponding to the reference position.

3. The working vehicle according to claim 1 or 2, wherein the second lifting control unit raises or lowers the lifting device within a set range between an upper limit and a lower limit of a height settable by the first setting member when the lifting operation member is operated.

4. The working vehicle according to claim 3, further comprising a second setting member capable of setting the upper limit of the height of the lifting device, wherein
the second lifting control unit raises or lowers the lifting device within a range defined as being not higher than the upper limit set by the second setting member.

5. The working vehicle according to any one of claims 1 to 4, wherein the second lifting control unit raises or lowers the lifting device during the operation of the lifting operation member.

6. The working vehicle according to any one of claims 1 to 5, wherein the first setting member is capable of setting a tilling depth of the working device as the reference position of the working device, and the first lifting control unit raises or lowers the lifting device so that the tilling depth is maintained constant.

7. A working vehicle comprising:
a vehicle body;
a lifting device provided on the vehicle body;
a first lifting operation tool configured to be operated to raise and lower the lifting device; and
a lifting controller configured to raise or lower the lifting device during the operation of the first lifting operation tool and to move, when the operation is released, the lifting device from a position where the operation is released to another position.

8. The working vehicle according to claim 7, further comprising a mode switching member configured to perform switching between a first mode and a second mode, wherein
when the first mode is set, the lifting controller raises or lowers the lifting device during operation of the first lifting operation tool and stops raising or lowering the lifting device when the operation is released, and
when the second mode is set, the lifting controller raises or lowers the lifting device during the operation of the first lifting operation tool and moves the lifting device to a predetermined position when the operation is released.

9. The working vehicle according to claim 7 or 8, wherein
the first lifting operation tool includes a first raising operation section configured to be operated to raise the lifting device and a first lowering operation section configured to be operated to lower the lifting device, and
the lifting controller raises the lifting device during operation of the first raising operation section and lowers the lifting device during operation of the first lowering operation section.

10. The working vehicle according to claim 9, further comprising:
a second lifting operation tool including a second raising operation section configured to be operated to raise the lifting device and a second lowering operation section configured to be operated to lower the lifting device; and
a height setting tool capable of setting an upper limit and a lower limit of a height of the lifting device, wherein
the lifting controller raises the lifting device to the upper limit position when the second raising operation section is operated and lowers the lifting device to the lower limit position when the second lowering operation section is operated.

11. The working vehicle according to claim 10, wherein the first lifting operation tool and the second lowering operation tool are arranged side by side.

12. The working vehicle according to any one of claims 7 to 11, further comprising a first setting member configured to set a reference position in a height direction of a working device coupled to the lifting device, wherein
the lifting controller sets the predetermined position to the reference position and performs reference lifting control to raise or lower the lifting device so that the lifting device is located at the reference position in a state where the operation of the first lifting operation tool is released in the second mode.
